# EUROPEAN PATENT SPECIFICATION

(11) **EP 4 189 010 B1**
(45) Date of publication and mention of the grant of the patent: **31.12.2025**
(21) Application number: 21751778.8
(22) Date of filing: 23.07.2021
(51) Int. Cl.: C08L 23/14, B33Y 30/00

(54) **POWDER COMPOSITION FOR ADDITIVE PROCESS AND PRINTED ARTICLES THEREOF**
PULVERZUSAMMENSETZUNG FÜR ADDITIVES VERFAHREN UND BEDRUCKTE GEGENSTÄNDE DARAUS
COMPOSITION EN POUDRE POUR PROCÉDÉ ADDITIF ET ARTICLES IMPRIMÉS CORRESPONDANTS

(30) Priority: 28.07.2020 EP 20305867
(43) Date of publication of application: 07.06.2023
(73) Proprietor: Stratasys, Inc., Minnetonka, MN 55343 (US)
(72) Inventor: DEME, Florian A., 38290 FRONTONAS (FR); GIMENEZ, Jérôme, 38290 FRONTONAS (FR)
(74) Representative: Davepon, Björn
(86) International application number: PCT/EP2021/070657
(87) International publication number: WO 2022/023195

(56) References cited:
- WO-A1-2019/092498
- CN-A- 110 437 538

## Description

The invention relates to a 3D printable powder that may be used in an additive process for the preparation of a three-dimensional article. According to the invention, the 3D printable powder comprises at least one flow aid and a powder of thermoplastic blend, said powder of thermoplastic blend comprising relative to the weight of the powder of thermoplastic blend from 75 wt% to 98 wt% of a polymeric matrix and from 2 wt% to 25 wt% of at least one olefinic thermoplastic elastomer. According to the invention, the polymeric matrix comprises at least 90 wt% of at least one polyolefin, and the at least one olefinic thermoplastic elastomer is chosen from ethylene acetate elastomers, ethylene acrylate elastomers, ethylene propylene elastomers and ethylene alpha-olefin elastomers.

A turning point has been reached in the last few years with the emergence of three-dimensional (3D) printing techniques allowing the production of custom and low-cost 3D articles. Using such technique, the 3D article is produced layer by layer. For this purpose, by means of upstream computer-aided design software (CAD), the 3D structure of the 3D article to be obtained is divided up into slices. The 3D article is then created by laying down successive slices or layers of material until the entire 3D article is produced. In other words, the slices are produced one by one in the form of layers, by carrying out the following binary sequence repeatedly:
- depositing a layer of the material necessary for producing the desired article on a platform or on an existing consolidated layer, followed by
- agglomerating said layer and bonding said layer to the precedent if present in accordance with the predefined pattern.

Thus, the 3D article is constructed by superposing elementary layers that are bonded one to another.

Conventional 3D printing processes are limited to particular types of materials. These materials should be resistant to heat (i.e. no degradation should occur upon heating during the additive process), to moisture, to radiation and to weathering, and should have a slow solidification time. Importantly, the slices or layers should adhere to one another in order to produce a 3D article with satisfactory mechanical strength that will not collapse. Ideally, the material should also have a low melting temperature and an appropriate viscosity or flowability.

Importantly, after the additive process, the obtained 3D articles should have the desired properties such as mechanical properties, and shoud be of the exact desired dimensions and shape.

The material is usually composed of polymer(s) in combination with additives that are used to tailor the properties of the material and of the resulting 3D articles. For example, dyes, fillers, viscosity agents or flowing aids are commonly added. Fillers are very important as they have an impact on thermal conductivity. Thermal conductivity is of importance during the additive process. Ideally, the thermal conductivity of the material is high and as well as its processing window. Flow aids are used to adapt the flowability of the material in order to be used in the additive process.

During the additive process, a portion of the deposited layer is not agglomerated, depending on the predefined pattern. It is desirable to reuse this non-agglomerated material for the preparation of another 3D article.

Another issue is the cost of these materials. Indeed, these materials may be expensive. To this end, research has focused on cheaper materials. Work has been carried out both on polymers and on additives.

Polyamides (e.g. PA 12) are commonly used in additive process such as SLS. Good results have been achieved with these polymers but they are quite expensive. Therefore, it is desirable to use cheaper polymers. In this context, polyolefins are attractive since they are cheap, exhibit electrical insulation properties, and are chemical and heat resistant. However, they usually have a moderate flowability, a slow cooling cycle time, a moderate mechanical performance like lower elongation at break, and also a lower thermal conductivity and a lower thermal diffusivity compared to polyamides. The processing window of polyolefins is also narrower than the one of polyamides due to the appearance of multiple crystalline phases making more difficult to avoid the presence of raised parts while printing and/or having thermal bleed on the printed parts.

Polyolefins in combination with various additives have already being tested for their used in additive process. However, the processing window is often too narrow and the mechanical properties are often not enough satisfactory.

In order to enhance the mechanical properties of materials comprising polyolefins, various additives have been tested. For example, document WO 2019/221733 describes a build material for 3D printing comprising polymeric particles comprising polypropylene and a surface-active coating in combination with at least one elastomer. Numerous elastomers are cited in this document, without one being highlighted as particularly efficient or preferred.

Another example is patent application WO 2019/182579 which relates to a three-dimensional printing composition comprising a polymeric powder build material comprising a thermoplastic polymer powder composition, said thermoplastic polymer powder composition comprising (a) at least 50 wt% of a C3 polyolefin or a mixture of two or more polyolefins including at least 60 wt% of a C3 polyolefin (b) 0.1 to 1 wt% of antioxidants, (c) 0.1 to 5 wt% of flow aids, (d) 0-10 wt% of a surface modifying agent, (e) 0.05-10 wt% of antistatic agents, (f) 2-40 wt% of a filler. The filler is selected from natural or synthetic inorganic fillers, ceramic fillers, natural or synthetic fillers. For example, fillers are selected from inorganic oxides, reinforcing materials, flame retarding compounds and elastomeric material, none of them being preferred. Several elastomeric are cited, none of them being highlighted.

Another example is described in patent application CN110437538 that relates to polypropylene materials used for 3D printing. Said materials are prepared from 60-85 parts by weight of polypropylene pellets, 5-25 parts by weight of thermoplastic elastomer, 5-25 parts by weight of talc derivative, 5-15 parts by weight of maleic anhydride grafted polypropylene, 0.5-2 parts by weight of antioxidant, 0.2-1.5 parts by weight of lubricant, 0.2-1.5 parts by weight of hyperdispersant, and 1-5 parts by weight of colouring agent. The materials do not comprise flow aid. The described polypropylene material is prepared as 1-10 mm long cylindrical pellets, and not as a powder. This material is used in a FDM process, and may be used neither in a SLS process nor in a MJF process that requires a powder with particular flowability properties.

Another example is described in patent application WO 2019/092498. In this document, a polymer composition comprising a heterophasic copolymer (or impact copolymer, ICP) including 50-95 wt% of a matrix polymer and an internal phase of an ethylene-propylene copolymer is used in 3D printing. The composition is in the form of filament or granule (or pellet) of 1-4 mm diameter. The composition does not comprise flow aid. Here again, the composition may not be used in all 3D printing processes, and in particular not in SLS and in MJF processes, since it is not in powder form with appropriate flowability.

Therefore, there is a need for a material for use in an additive process having the above mentioned properties (e.g. resistance to heat, to moisture, to radiation, to weathering, having good mechanical strength, low melting temperature and slow solidification time, good flowability and and having good thermal conductivity) that is not too expensive. More particularly, there is a need for a material for use in an additive process based on polyolefin(s) having a good processing window and improved mechanical properties such as increased elongation at break and increased impact resistance. Importantly, the material should afford 3D articles with the expected dimensions and shape, and with the desired physico chemical properties. Adantageously, the material is in a powder form with appropriate flowability in order to be used in selective laser sintering or the multi-jet fusion technique. Advantageousy, the non-agglomerated material may be reused for the preparation of other 3D articles.

In this context, the Applicant has solved the above mentioned problem by providing a 3D printable powder comprising:
- a powder of thermoplastic blend comprising relative to the weight of the thermoplastic blend:
   - from 75 wt% to 98 wt%, preferably more than 75 wt% and up to 98 wt%, of a polymeric matrix comprising at least 90 wt% relative to the weight of the polymeric matrix of at least one polyolefin, and
   - from 2 wt% to 25 wt%, preferably from 2 wt% to less than 25 wt%, of at least one olefinic thermoplastic elastomer, said olefinic thermoplastic elastomer being chosen from ethylene acetate elastomers, ethylene acrylate elastomers, ethylene propylene elastomers and ethylene alpha-olefin elastomers, and
- at least one flow aid.

The Applicant has surprinsingly discovered that the combined used of a polymeric matrix comprising at least 90 wt% relative to the weight of the polymeric matrix of polyolefin(s) and of elastomers according to the invention results in 3D printable powders with high elongation at break, high impact resistance and a wide processing window.

In the context of the invention, a "3D printable powder" is a powder or pulverulent solid that is usable in a 3D printing process, such as selective laser sintering (SLS) or multi-jet fusion (MJF). Therefore, a 3D printable powder preferably has specific characteristics in order to be used in such process, such as specific melt flow index, flowability, thermal properties and granulometry as detailed below. As a consequence, a powder in the context of the invention is different from filaments, granules or pellets of the prior art that may be of diameter of a few mm.

In the context of the invention, the bulk density of the 3D printable powders preferably ranges from 0.22 g/cm³ to 0.55 g/cm³.

The 3D printable powders of the invention preferably have a tap density ranging from 0.27 g/cm³ to 0.66 g/cm³.

The number of tap for reaching half of tap density (n1/2) is preferably ranging from 3 to 30.

The haussner ratio is the ratio bulk density/tap density. Preferably in the context of the invention, the haussner ration ranges from 1.01 to 1.35.

Bulk and tap densities as well as n1/2 and Haussner ratio may be measured with a granupack from Granutools brand, according to ISO8967, ASTM B527 standard

3D printable powders preferably have a melt flow index ranging from 1 g/10 min to 40 g/10 min, more preferably from 3 g/10 min to 30 g/10 min, even more preferably ranging from 5 g/10 min to 15 g/10 min, at a temperature T_{mfi} and under a load of 2.16 kg. The melt flow index is determined according to ISO 1133:2011 standard which indicates the value of T_{mfi} depending on the polymer(s) (i.e. polyolefin(s) and optional additional polymer(s)) present in ther 3D printable powder. For example, when polypropylene homopolymer or copolymer is only present, the temperature T_{mfi} is of 230°C.

In order to be successfully used in an additive process, a 3D printable powder preferably has specific thermal properties. Advantageously, its melting peak temperature Tₘ is at least 20°C higher than its crystallization temperature T_{c}. Advantageously, its melting peak temperature Tₘ is at most 10 °C higher than its onset melting temperature T_{m onset}. Advantageously, its start melt temperature T_{m start} is at least higher than the onset crystallization temperature T_{c onset}. The melting peak temperature Tₘ, the crystallization temperature T_{c}, the onset melting temperature T_{m onset}, and the start melt temperature T_{m start} may be determined by differential scanning calorimetry (DSC) usually at ±10°C / min.

The melting peak temperature Tₘ corresponds to the temperature measured at the maximum of the peak of the thermal phenomenon corresponding to melting. The start melt temperature T_{m start} corresponds to the start of the phenomenon of melting of the crystallites, i.e. when the first crystallites start to melt. The onset value corresponds to an extrapolated temperature corresponding to the intersection of the base line of the peak and of the tangent to the point with the largest slope of the first portion of the melting peak for temperatures below the maximum temperature for the peak. The onset of crystallization is determined with the same graphical method during the cooling phase. The crystallization temperature corresponds to the temperature measured at the maximum of the peak of the thermal phenomenon corresponding to crystallization.

In order to be used in an additive process, a 3D printable powder preferably has a melting peak temperature Tₘ from about 70 °C to about 250 °C, preferably from about 110 °C to about 180 °C.

In order to be used in an additive process, the processing window (i.e. the gap between the onset of the crystallisation peak and the onset of the melting peak) is advantageously of at least 10°C.

In order to be used in an additive process, a 3D printable powder advantageously has:
- a mean particle size d10 ranging from 20 µm to 60 µm,
- a mean particle size d50 ranging from 40 µm to 130 µm, and
- a mean particle size d90 ranging from 75 µm to 200 µm.

The mean particle sizes d10, d50, d90 and d99 are the mean sizes of particles (corresponding to the highest dimension of said particles) for which 10%, 50%, 90% and 99% by volume respectively of said particles have a lower size, as measured by dry laser granulometry technique (also known as laser diffraction granulometry). When the particle is spherical, the mean particle size d50 corresponds to the mean particle diameter d50.

The 3D printable powder according to the invention may further have one or more of the following characteristics:
- the olefinic thermoplastic elastomer is chosen from ethylene propylene elastomers and ethylene alpha-olefin elastomers,
- the polyolefin is chosen from polyethylene, polypropylene, polybutene-1, polymethylpentene, polyoctene, polyisoprene, polybutadiene, or a copolymer thereof,
- the polyolefin is a copolymer of polyethylene, polypropylene, polybutene-1, polymethylpentene, polyoctene, polyisoprene, or polybutadiene with a C2-C12 alpha-alkylene,
- the polymeric matrix comprises at least one additional polymer, said additional polymer not being a polyolefin, preferably chosen from polyamides, polyesters, and polyetheramides,
- the polymeric matrix does not comprise additional polymer,
- the at least one flow aid is chosen from silica, alumina, and waxes having a melting temperature of at least the melting temperature of the polymeric matrix minus 10 °C,
- the powder of thermoplastic blend further comprises fillers, antioxidant(s), co-crystallizer(s), plasticizer(s), dye(s), thermal stabilizer(s), antistatic agent(s), waxe(s), anti-nucleating agent(s) and/or compatibilizer(s),
- the 3D printable powder has an elongation at break of at least 40% measured according to ASTM D638 standard,
- the 3D printable powder has a Charpy unnotched impact of at least 30 kJ/m² at 23 °C measured according to ISO 179-1 standard, and
- the 3D printable powder has a mean particle size d90 ranging from 75 µm to 200 µm.

The invention further relates to the process of preparation of the 3D printable powder according to the invention. In the context of the invention, the 3D printable powder is prepared according to the following steps:
a) providing a polymeric matrix comprising 90 wt% relative to the weight of the polymeric matrix of at least one polyolefin,
b) providing at least one olefinic thermoplastic elastomer chosen from ethylene acetate elastomers, ethylene acrylate elastomers, ethylene propylene elastomers and ethylene apha-olefin elastomers,
c) mixing the polymeric matrix with the olefinic thermoplastic elastomer(s) at a temperature of at least the highest temperature between the melting temperature of the polymeric matrix and the melting temperature of the olefinic thermoplastic elastomer(s),
d) powdering the resulting mixture to obtain a powder of thermoplastic blend,
e) mixing the powder of thermoplastic blend with at least one flow aid,
f) sieving to obtain the 3D printable powder.

The process of preparing of the 3D printable powder according to the invention may have one or more of the following characteristics:
- step c) comprises the following steps:
   c1.1) mixing the polymeric matrix at a temperature of at least the highest temperature between the melting temperature of the polymeric matrix and the melting temperature of the olefinic thermoplastic elastomer(s) to obtain a melted polymeric matrix,
   c1.2) adding the at least one olefinic thermoplastic elastomer to the melted polymeric matrix, and
   c1.3) mixing the melted polymeric matrix and the at least one olefinic thermoplastic elastomer,
- step c) comprises the following steps:
   c2.1) mixing the polymeric matrix and the at least one olefinic thermoplastic elastomer, and
   c2.2) heating the resulting mixture at a temperature of at least the highest temperature between the melting temperature of the polymeric matrix and the melting temperature of the olefinic thermoplastic elastomer(s),
- fillers, antioxidant(s), anti nucleating agent(s), co-crystallizer(s), plasticizer(s), dye(s), thermal stabilizer(s), antistatic agent(s), waxe(s), and/or compatibilizer(s) are added at step c) and/or after step f), simultaneously or one after the other in any order,
- the process comprises a step g) carried out after step d) and/or step e) and/or step f) of oxidation, mechanical and/or thermal treatment, surface coating, rounding particle, and/or air classification, and
- step c) is carried out in an extruder, preferably a twin-screw extruder.

The invention also relates to a 3D printed article made from a 3D printable powder according to the invention, or from a 3D printable powder obtained with the process of preparation of a 3D printable powder according to the invention.

In addition, the invention relates to a method for preparing a 3D printed article according to the invention using an additive process such as SLS or MJF.

Finally, the invention relates to the use of a 3D printable powder according to the invention, or of a 3D printable powder obtained thanks to the process according to the invention, for the manufacture of a three-dimensional printed article.

### 3D printable powder

The 3D printable powder according to the invention comprises a mixture of a powder of thermoplastic blend and at least one flow aid.

In the context of the invention, "a powder of thermoplastic blend" is a powder having thermoplastic properties and that comprises an intimate mixture of polymeric matrix and olefinic thermoplastic elastomer, as defined below.

According to the invention, the powder of thermoplastic blend comprises from 2 wt% to 25 wt% of at least one specific olefinic thermoplastic elastomer and from 75 wt% to 98 wt% of a polymeric matrix relative to the weight of the powder of thermoplastic blend.

In the context of the invention, a "polymeric matrix" is a polyolefin or a mixture of polymers comprising at least one polyolefin. More precisely, the polymeric matrix comprises at least 90 wt% of at least one polyolefin relative to the weight of the polymeric matrix.

In the context of the invention, a "polyolefin" is a polymer prepared mainly from olefinic (or alkene) monomers, and preferably made of at least 95 wt% of olefinic monomers relative to the weight of the polyolefin. In a particular embodiment, a "polyolefin" is prepared only from olefinic monomers.

In the context of the invention, the at least one polyolefin may be a homopolymer or a copolymer such as block copolymer or random copolymer.

The term "random" indicates that the co-monomers of the polyolefin are randomly distributed within the polyolefin. Random copolymers are also named statistical copolymers. On the other hand, "block copolymers"are polymers made of blocks of homopolymers of different nature.

According to a first embodiment, the polyolefin is a homopolymer. In this case, the polyolefin may be chosen from polyethylene, polypropylene, polybutene-1, polymethylpentene, polyoctene, polyisoprene, polybutadiene or a blend of at least two of these polyolefins. Preferably, polyethylene or polypropylene is used. According to a particular embodiment, polypropylene is used.

According to a second embodiment, the polyolefin is a copolymer. In this case, the polyolefin is preferably a copolymer of polyethylene, polypropylene, polybutene-1, polymethylpentene, polyoctene, polyisoprene, polybutadiene, or a blend of at least two of these polyolefins with at least one comonomer chosen from C2-C12 alpha-alkylene. It is understood that said comonomer is different from the other monomer(s) of the polyolefin. As examples of comonomers, one can cite ethylene, propylene, 1-butene, 1-pentene, 1-hexene, 1-octene, and 4-methyl-1-pentene. Preferably, ethylene or 1-butene is used, even more preferably ethylene is used. According to a preferred embodiment, the polyolefin is a copolymer of polyethylene or polypropylene with ethylene or 1-butene, preferably the polyolefin is a copolymer of polypropylene with ethylene. According to this embodiment, said comonomer is preferably present in an amount ranging from 1 wt% to 8 wt%, preferably from 1.5 wt% to 4 wt% relative to the total weight of the polyolefin. The amount of comonomer in the polyolefin may be determined by IR or ¹³C NMR.

According to a particular embodiment, the polyolefin is a copolymer of polyethylene, polypropylene, polybutene-1, polymethylpentene, polyoctene, polyisoprene, polybutadiene, or a blend of at least two of these polyolefins with at least one first comonomer chosen from C2-C12 alpha-alkylene and with at least a second comonomer, said second comonomer not being an alkene. According to this particular embodiment, the polyolefin is preferably a copolymer of polyethylene, polypropylene, polybutene-1, polymethylpentene, polyoctene, polyisoprene, polybutadiene, or a blend of at least two of these polyolefins with at least one first comonomer chosen from C2-C12 alpha-alkylene, and a second comonomer not being an alkene. It is understood that said comonomers are different from the other monomer(s) of the polyolefin. As examples of first comonomers, one can cite ethylene, propylene, 1-butene, 1-pentene, 1-hexene, 1-octene, and 4-methyl-1-pentene. Preferably, ethylene or 1-butene is used as first comonomer, even more preferably ethylene is used. The second comonomer may be for example chosen from maleic anhydride, glycidyl methacrylate, acrylic acid, vinyl acrylate, butyl acrylate, methyl acrylate, methyl methacrylate and methacrylic acid, or a combination thereof. According to this embodiment, the second comonomer may be either included in the chain of the polyolefin copolymer (meaning that the copolymer is linear) or grafted on the polyolefinic chain. According to a preferred embodiment, the polyolefin is a copolymer of polyethylene or polypropylene with ethylene or 1-butene and with maleic anhydride or glycidyl methacrylate, preferably the polyolefin is a copolymer of polypropylene with ethylene and maleic anhydride or glycidyl methacrylate. According to this particular embodiment, the first comonomer is preferably present in an amount ranging from 1 wt% to 8 wt%, and the second comonomer is preferably present in an amount ranging from 0.3 to 5 wt%, relative to the total weight of the polyolefin.

The molecular weight distribution is defined as Mw/Mn, with Mw representing the weight average molecular weight and Mn representing the number average molecular weight. Molecular weight can be determined by size exclusion chromatography or gel permeation chromatography. According to the invention, the polyolefin has a molecular weight distribution ranging from 2 to 5, preferably from 2.1 to 4 and even more preferably from 2.2 to 3.5.

According to an embodiment, the polyolefin used has a melt flow index ranging from 1 g/10 min to 40 g/10 min, preferably from 3 g/10 min to 30 g/10 min, more preferably ranging from 5 g/10 min to 15 g/10 min, at a temperature T_{mfi} and under a load of 2.16 kg. The melt flow index and the temperature T_{mfi} are determined according to ISO 1133:2011 standard.

The polyolefin preferably has specific thermal properties. Advantageously, its melting peak temperature Tₘ is at least 20 °C higher than its crystallization temperature T_{c}. Advantageously, its melting peak temperature Tₘ is at most 10 °C higher than its onset melting temperature T_{m onset}. Advantageously, its start melt temperature T_{m start} is at least higher than the onset crystallization temperature T_{c onset}. The melting peak temperature Tₘ, the crystallization temperature T_{c}, the onset melting temperature T_{m onset}, the onset crystallization temperature T_{c onset} and the start melt temperature T_{m start} may be determined by differential scanning calorimetry (DSC) usually at ±10°C / min.

In a particular embodiment, the polyolefin has a melting peak temperature Tₘ from about 70 °C to about 250 °C. In another embodiment, the polyolefin has a melting peak temperature Tₘ from about 110 °C to about 180 °C.

Advantageously, the processing window is advantageously of at least 15°C, more advantageously of at least 20°C and even more advantageously of at least 30°C.

The polyolefin may be used as powder or as pellets. Preferably, the polyolefin is used as pellets.

The at least one polyolefin is present in an amount ranging of at least 90 wt% relative to the weight of the polymeric matrix, and preferably ranging from 92 wt% to 99.5 wt% and even more preferably from 94 wt% to 99 wt%.

The at least one polyolefin is present in an amount ranging from 47 wt% to 98 wt% relative to the weight of the 3D printable powder, preferably from 55 wt% to 97 wt%.

According to a first embodiment, the polymeric matrix comprises at least one polyolefin and does not comprise any additional polymer, i.e. not any polymer other than polyolefin(s). In other words, the polymeric matrix according to this embodiment is constituted of one or more polyolefins, and preferably only one polyolefin. According to this embodiment, the polyolefin is preferably present in an amount ranging from 50 wt% to 98 wt% relative to the weight of the 3D printable powder, more preferably from 55 wt% to 98 wt% and even more preferably from 60 wt% to 97 wt%.

According to a second embodiment, the polymeric matrix comprises at least one polyolefin and at least one additional polymer. According to this embodiment, the additional polymer is not a polyolefin, and may be chosen from polyesters, polyamides or polyetheramides for example. Advantageously according to this embodiment, the at least one additional polymer is present in an amount of no more than 10 wt%, and preferably in an amount ranging from 0.3 wt% to 7 wt%, relative to the total weight of the 3D printable powder. According to this embodiment, the polyolefin is preferably present in an amount ranging from 47 wt% to 97.5 wt% relative to the weight of the 3D printable powder, more preferably from 50 wt% to 95 wt% and even more preferably from 53 wt% to 93 wt%. Advantageously according to this embodiment, the weight ratio between the polyolefin(s) and the additional polymer(s) is ranging from 100:0.5 to 100:11, preferably from 100:1 to 100:8.

The polymeric matrix according to the invention advantageously has a single melting temperature and a single cristallization temperature, even if the polymeric matrix comprises one or more polyolefin and eventually additional polymer(s). In the context of the invention, the melting temperature of the polymeric matrix corresponds to the melting peak temperature as defined above, and the crystallization temperature correspond to the crystallization peak temperature as defined above. In order to have polymeric matrix having a single melting temperature and a single crystallization temperature, the polyolefin(s) and the optional additional polymer(s) and their respective contents are selected and adjusted by one skilled in the art.

Advantageously in the context of the invention, the polymeric matrix comprises only polyolefin(s), and preferably only one polyolefin.

The 3D printable powder of the invention further comprises at least one olefinic thermoplastic elastomer chosen from ethylene acetate elastomers, ethylene acrylate elastomers, ethylene propylene elastomers and ethylene alpha-olefin elastomers, and preferably only one of said olefinic thermoplastic elastomers. When more than one olefinic thermoplastic elastomer are present in the 3D printable powder according to the invention, various mixtures of olefinic thermoplastic elastomers may be chosen depending on the desired characteristics of the 3D printable powder, i.e. mixtures of same or of different kind of olefinic thermoplastic elastomers. There is no limitation concerning these possible mixtures and one skilled in the art is able to optimize the mixture to tailor the desired properties of the resulting 3D printable powder.

In the context of the invention, an "elastomer" is a polymer having elastic properties. Elastomers are defined by a hardness (that may be measured according to DIN 53505, NF EN ISO 868, NF ISO 48-4 and ASTM D 2240 standards) inferior to 60 Shore D. Elastomers are also defined by an elongation at break of at least 500% (that may be measured according to NF ISO 37, ISO D412, ASTM D412-16 and DIN53504-S2 standards). Elastomers are further defined by a secant Young modulus at 100% and 300% elongation (that may be measured according to NF ISO 37, ISO D412 and DIN53504-S2 standards) comprised between 1 MPa and 16 MPa.

In the context of the invention a "thermoplastic" polymer is a polymer that becomes pliable or moldable when heated above a given temperature and that solidifies upon cooling. Thermoplastic polymers are defined by a tangent Young modulus superior to 500 MPa (that may be measured according to NF EN ISO 527-2 and ASTM D638-08 standards) and a hardness superior to 60 Shore D (that may be measured according to DIN 53505, NF EN ISO 868, NF ISO 48-4 and ASTM D 2240 standards).

In the context of the invention, the "olefinic thermoplastic elastomer" is a thermoplastic elastomer mainly made of olefin monomers, preferably made of at least 60 wt% of olefin monomers relative to the weight of the olefinic thermoplastic elastomer, and in a particular embodiment only made of olefin monomers. It may be a block copolymer or a random copolymer.

In the context of the invention, an "ethylene acetate elastomer" is made only from ethylene monomer and at least one acetate monomer, preferably one acetate monomer. The relative amounts of ethylene monomer and acetate monomer(s) may be varied such that the elastomeric properties are preserved. Ethylene acetate elastomers may be a block or a random copolymer, preferably random copolymer.

Examples of ethylene acetate elastomers that may be used in the context of the present invention are ethylene vinyl acetate copolymers such as the branded Primeva^{®} grades by Repsol or the branded Evatane^{®} grades by SK Global Chemicals.

In the context of the invention, an "ethylene acrylate elastomer" is made only from ethylene monomer and at least one acrylate monomer, preferably one acrylate monomer. The relative amounts of ethylene monomer and acrylate monomer(s) may be varied such that the elastomeric properties are preserved. Ethylene acrylate elastomers may be a block or a random copolymer, preferably random copolymer such as ethylene butyl acrylate. Example of ethylene butyl acrylate elastomers that may be used in the context of the present invention are ethylene butyl acrylate copolymers such as the branded Ebantix^{®} grades by Repsol.

In the context of the invention, an "ethylene propylene" elastomer is made only from ethylene monomer and propylene monomer. It is then a block or random copolymer made from ethylene and propylene. Advantageously, the ethylene propylene elastomer is a random copolymer.

The ethylene content in the ethylene propylene elastomer ranges preferably from 2 wt% to 20 wt%, preferably from 4 wt% to 16 wt%, relative to the total weight of the ethylene propylene elastomer.

Example of ethylene propylene elastomers that may be used in the context of the present invention are ethylene propylene copolymers such as the branded Adflex^{®} grades by Lyondell Basell and the Branded Vistamaxx^{™} by Exxon Mobil.

In the context of the invention, an "ethylene alpha-olefin" elastomer is made only from ethylene and at least one alpha-olefin monomer, and preferably from ethylene and one alpha-olefin monomer. It is then a block or random copolymer of ethylene and alpha-olefin(s).

In the context of the invention, an "alpha-olefin" (or α-olefin) is an olefin (or alkene) having a double bond at the primary or alpha position. The alpha-olefin may be linear or branched, preferably linear. Preferably, the alpha-olefin is a C2-C12 alpha-olefin, more preferably C4-C10, and even more preferably C4-C8. Examples of alpha-olefins that may be used are but-1-ene, pent-1-ene, hex-1-ene, hept-1-ene, oct-1-ene, non-1-ene, dec-1-ene. Particularly preferred alpha-olefins are but-1-ene and oct-1-ene.

The ethylene content in the ethylene alpha-olefin elastomer is preferably of at least 85 wt% relative to the weight of the ethylene alpha-olefin elastomer.

The alpha-olefin content in the ethylene alpha-olefin elastomer is preferably of at least 2 wt% relative to the weight of the ethylene alpha-olefin elastomer.

Examples of ethylene alpha-olefin elastomers that may be used in the context of the invention are ethylene octene copolymers or ethylene butene copolymers such as Engage^{™} grades sold by Dow Chemicals having a melting temperature of at most 100 °C and Affinity^{™} grades sold by Dow Chemicals.

In a preferred embodiment, the olefinic thermoplastic elastomer is chosen from ethylene propylene elastomers and ethylene alpha-olefin elastomers.

The powder of thermoplastic blend comprises between 2 wt% to 25 wt% of olefinic thermoplastic elastomer(s), preferably from 5 wt% to 20 wt% and even more preferably from 7 wt% to 15 wt%, relative to the weight of powder of thermoplastic blend.

The 3D printable powder comprises 1.5 wt% to 25 wt% of olefinic thermoplastic elastomer(s), preferably from 3 wt% to 20 wt% and even more preferably from 5 wt% to 15 wt%, relative to the weight of 3D printable powder.

The olefinic thermoplastic polymer used in the context of the invention is in solid form, preferably as a powder or as pellets. According to a particular embodiment, the olefinic thermoplastic elastomer is in form of pellet and may have any shape.

The ethylene propylene elastomer preferably has a melt mass flow rate ranging from 0.5 g/10 min to 45 g/10 min at 230°C and under 2.16kg, preferably from 0.6 g/10 min to 10 g/10 min at 230°C and under2.16kg.

The ethylene alpha-olefin elastomer preferably has a melt mass flow rate ranging from 0.5 g/10 min to 45 g/10 min at 190°C and under 2.16kg, preferably from 0.6 g/10 min to 10 g/10 min at 190°C and under 2.16kg.

The melt mass flow rate is indicative of the viscosity of the elastomer in the melt phase. It is defined as the mass of elastomer in grams flowing per 10 minutes through a capillary of specific diameter (2.095 mm ± 0.005 mm in the context of the invention) and specific length (8 mm in the context of the present invention) by a pressure applied via a range of standard weights at specified temperature. In the context of the invention, it is measured under 2.16 kg, according to Standard ISO 1133:2011.

The olefinic thermoplastic elastomer has preferably a glass transition temperature ranging from -70 °C to -10 °C, preferably from -60 °C to -20 °C. The glass transition temperature T_{g} is the temperature at which the glass transition occurs. The glass transition is the gradual and reversible transition from hard and brittle state to amorphous state. The glass transition temperature may be measured by DSC at 10°C/min.

The olefinic thermoplastic elastomer may have an elongation at break ranging from 600% to 1500%, preferably from 800% to 1200%. The elongation at break may be measured according to ASTM D638 standard.

The olefinic thermoplastic elastomer preferably has a tensile strength at break ranging from 3 MPa to 30 MPa, preferably from 5 MPa to 27 MPa. The tensile strength at break may be measured according to ASTM D638 standard.

According to a first embodiment, the 3D printable powder comprises a homopolymer of polyethylene, polypropylene, polybutene-1, polymethylpentene, polyoctene, polyisoprene, polybutadiene or a blend of at least two of these polyolefins, and preferably a homopolymer of ethylene or propylene, and the olefinic thermoplastic elastomer is chosen from propylene ethylene elastomers. According to this embodiment, the polyolefin is present in an amount ranging from 47 wt% to 98 wt% relative to the weight of the 3D printable powder, preferably from 55 wt% to 97 wt%. According to this embodiment, the ethylene propylene elastomer is present in an amount ranging from 1.5 wt% to 25 wt% relative to the weight of the 3D printable powder, preferably from 3 wt% to 20 wt%, even more preferably from 5 wt% to 15 wt%.

According to a second embodiment, the 3D printable powder comprises a homopolymer of polyethylene, polypropylene, polybutene-1, polymethylpentene, polyoctene, polyisoprene, polybutadiene or a blend of at least two of these polyolefins, and preferably a homopolymer of ethylene or propylene, and the olefinic thermoplastic elastomer is chosen from ethylene alpha-olefin elastomers. According to this embodiment, the polyolefin is present in an amount ranging from 47 wt% to 98 wt% relative to the weight of the 3D printable powder, preferably from 55 wt% to 97 wt%. According to this embodiment, the ethylene alpha-olefin elastomer is present in an amount ranging from 1.5 wt% to 25 wt%, preferably from 3 wt% to 20 wt%, even more preferably from 5 wt% to 15 wt%, relative to the weight of the 3D printable powder.

According to a third embodiment, the 3D printable powder comprises a copolymer of polyethylene, polypropylene, polybutene-1, polymethylpentene, polyoctene, polyisoprene, polybutadiene or a blend of at least two of these polyolefins with a C2-C12 alpha-alkylene preferably chosen from ethylene, propylene, 1-butene, 1-pentene, 1-hexene, 1-octene, and 4-methyl-1-pentene, and preferably a copolymer of ethylene or propylene with ethylene or 1-butene, and the olefinic thermoplastic elastomer is chosen from propylene ethylene elastomers. According to this embodiment, the polyolefin is present in an amount ranging from 47 wt% to 98 wt% relative to the weight of the 3D printable powder, preferably from 55 wt% to 97 wt%. According to this embodiment, the ethylene propylene elastomer is present in an amount ranging from 1.5 wt% to 25 wt%, preferably from 3 wt% to 20 wt%, even more preferably from 5 wt% to 15 wt%, relative to the weight of the 3D printable powder.

According to a fourth embodiment, the 3D printable powder comprises a copolymer of polyethylene, polypropylene, polybutene-1, polymethylpentene, polyoctene, polyisoprene, polybutadiene or a blend of at least two of these polyolefins with a C2-C12 alpha-alkylene preferably chosen from ethylene, propylene, 1-butene, 1-pentene, 1-hexene, 1-octene, and 4-methyl-1-pentene, and preferably a copolymer of ethylene or propylene with ethylene or 1-butene, and the olefinic thermoplastic elastomer is chosen from ethylene alpha-olefin elastomers. According to this embodiment, the polyolefin is present in an amount ranging from 47 wt% to 98 wt% relative to the weight of the 3D printable powder, preferably from 55 wt% to 97 wt%. According to this embodiment, the ethylene propylene elastomer is present in an amount ranging from 1.5 wt% to 25 wt%, preferably from 3 wt% to 20 wt%, even more preferably from 5 wt% to 15 wt%, relative to the weight of the 3D printable powder.

According to a fifth embodiment, the 3D printable powder comprises a homopolymer of polyethylene, polypropylene, polybutene-1, polymethylpentene, polyoctene, polyisoprene, polybutadiene or a blend of at least two of these polyolefins, and preferably a homopolymer of ethylene or propylene, and the olefinic thermoplastic elastomer is chosen from ethylene acetate elastomers and ethylene acrylate elastomers. According to this embodiment, the polyolefin is present in an amount ranging from 47 wt% to 98 wt% relative to the weight of the 3D printable powder, preferably from 55 wt% to 97 wt%. According to this embodiment, the olefinic thermoplastic elastomer is present in an amount ranging from 1.5 wt% to 25 wt%, preferably from 3 wt% to 20 wt%, even more preferably from 5 wt% to 15 wt%, relative to the weight of the 3D printable powder.

According to a sixth embodiment, the 3D printable powder comprises a copolymer of polyethylene, polypropylene, polybutene-1, polymethylpentene, polyoctene, polyisoprene, polybutadiene or a blend of at least two of these polyolefins with a C2-C12 alpha-alkylene preferably chosen from ethylene, propylene, 1-butene, 1-pentene, 1-hexene, 1-octene, and 4-methyl-1-pentene, and preferably a copolymer of ethylene or propylene with ethylene or 1-butene, and the olefinic thermoplastic elastomer is chosen from ethylene acetate elastomers and ethylene acrylate elastomers. According to this embodiment, the polyolefin is present in an amount ranging from 47 wt% to 98 wt% relative to the weight of the 3D printable powder, preferably from 55 wt% to 97 wt%. According to this embodiment, the olefinic thermoplastic elastomer is present in an amount ranging from 1.5 wt% to 25 wt%, preferably from 3 wt% to 20 wt%, even more preferably from 5 wt% to 15 wt%, relative to the weight of the 3D printable powder.

The 3D printable composition further comprises at least one flow aid.

In the context of the invention, the at least one flow aid is in solid form, e.g. as a powder.

Preferably, the at least one flow aid is present as nano or micro particles.

In the context of the invention, "nanoparticles" refer to particles of nanometric elementary size, i.e. of elementary size of at least 1 nm and no more than 100 nm.

By "elementary size", it is meant the highest dimension of the particle.

In the context of the invention, "microparticles" refer to particles of micrometric elementary size, i.e. of elementary size of at least 1 µm and no more than 100 µm.

Examples of flow aids that may be used in the context of the invention are silica such as micrometric colloidal silica or nanometric fumed silica, alumina such as micro or nano spheric particles of alumina, and waxes presenting a melting temperature of at least the melting temperature of the polymeric matrix minus 10°C such as long chain carboxylic acid amide, long chain carboxylic acid ester and long chain cationic carboxylate.

Advantageously, flow aid(s) is(are) present in the 3D printable powder in an amount ranging from 0.02 wt% to 1 wt%, preferably from 0.1 wt% to 0.5 wt%, relative to the weight of the 3D printable powder.

The 3D printable powder may further comprise one or more additives. These additives may be chosen from fillers, anti-oxidants, anti nucleating agent, co-crystallizers, plasticizers, dyes, thermal stabilizers, antistatic agents, waxes, and compatibilizers such as maleic anhydride grafted polymer powder. When the 3D printable powder comprises one or more additives, they are preferably present in an amount of less than 30 wt%, preferably less than 20 wt% even more preferably less than 10% relative to the total weight of the 3D printable powder.

Fillers that may be used in the context of the invention are natural or synthetic inorganic fillers such as glass beads, fumed silica, hollow glass beads, glass fibers, crushed glass, silicone dioxide, aluminum oxide, calcium carbonate, kaolin (hydrous aluminum silicate), and combinations thereof, ceramic fillers such ceramic fibers, silicon carbide fibers, alumina fiber, and combinations thereof, natural or synthetic organic fillers such as carbon fibers, polyamide fibers, polytetrafluoroethylene fibers, liquid crystal (LCP) fibers, Kevlar^{®} fibers, and combinations thereof; inorganic oxides, carbides, borides and nitrides such as inorganic oxides, nitrides, borides and carbides of zirconium, tantalum, titanium, tungsten, boron, aluminum and beryllium, silicon carbide and aluminum oxide.

Flame retarding agents may be cited as particular fillers. When a flame retarding agent is present in the 3D printable powder, it may be selected from the group consisting of an alkali or earth alkali sulfonate, sulphonamide salt, perfluoroborate, halogenated compound, polyphosphoric acid, phosphorus pentoxide, organic polyphosphonates and phosphorus-bearing organic compound, and combinations thereof. Advantageously, non-halogenated flame retarding agents are preferred.

In a particular embodiment, the 3D printable powder does not comprise surface-active coating and/or talc.

The 3D printable powder according to the invention has advantageously a mean particle size d10 ranging from 20 µm to 60 µm, preferably from 24 µm to 50 µm, more preferably from 30 µm to 50 µm, and even more preferably from from 30 µm to 45 µm.

Advantagously, the 3D printable powder has a mean particle size d50 ranging from 40 µm to 130 µm, preferably 50 µm to 110 µm, preferably 50 µm to 90 µm, more preferably 50 µm to 80 µm, even more preferably from 54 µm to 75 µm.

Advantagously, the 3D printable powder has a mean particle size d90 ranging from 75 µm to 200 µm, preferably from 85 µm to 160 µm, preferably 85 µm to 150 µm, more preferably 85 µm to 135 µm, and even more preferably from 90 µm to 115 µm.

Advantageously, the 3D printable powder has a mean particle size d99 of at most 300 µm, preferably lower than 250 µm. In a particular embodiment, the 3D printable powder has a mean particle size d99 ranging from 90 µm to 250 µm. Advantageously, the 3D printable powder has a mean particle size d99 of at most 200 µm, preferably lower than 180 µm.

The mean particle sizes d10, d50, d90 and d99 are measured as defined above.

The 3D printable powder according to the invention has advantageous thermal and mechanical properties.

Advantageously, the processing window is of at least 15°C, more advantageously of at least 20 °C and even more advantageously of at least 30 °C.

Advantageously, the elongation at break is of at least 30%, more advantageously at least 40%, and even more advantageously at least 50%. The elongation at break is measured as defined above.

Advantageously, the Charpy unnotched impact is of at least 30 kJ/m² at 23 °C, more advantageously at least 40 kJ/m² at 23 °C and more advantageously at least 50 kJ/m² at 23 °C. The Charpy unnotched impact may be measured according to ISO 179-1 standard.

According to an advantageous aspect of the invention, the presence of an olefinic thermoplastic elastomer chosen from ethylene acetate elastomers, ethylene acrylate elastomers, ethylene propylene elastomers and ethylene alpha-olefin elastomers does not change the processing windows of the 3D printable powder. In other words the melting onset temperature is not lowered by more than 5°C and preferencially not more than 3 °C, and the onset crystallisation temperature is not increased by more than 3°C and preferencially not more than 2°C.

### Process of preparation of the 3D printable powder

The invention further relates to a process of preparation of the 3D printable powder according to the invention. Said process of preparation comprises the following successive steps:
a) providing a polymeric matrix comprising 90 wt% relative to the weight of the polymeric matrix of at least one polyolefin,
b) providing at least one olefinic thermoplastic elastomer chosen from ethylene acetate elastomers, ethylene acrylate elastomers, ethylene propylene elastomers and ethylene apha-olefin elastomers,
c) mixing the polymeric matrix with the at least one olefinic thermoplastic elastomer at a temperature of at least the highest temperature between the melting temperature of the polymeric matrix and the melting temperature of the olefinic thermoplastic elastomer(s), preferably at least 30 °C superior to the highest temperature between the melting temperature of the polymeric matrix and the melting temperature of the olefinic thermoplastic elastomer(s),
d) powdering the resulting mixture to obtain a powder of thermoplastic blend,
e) mixing the powder of thermoplastic blend with at least one flow aid,
f) sieving to obtain the 3D printable powder.

The polyolefin(s) and the olefinic thermoplastic elastomer(s) are as described above.

The melting temperature of the polymeric matrix is defined as the melting peak temperature of the polymeric matrix. This melting temperature is closed to the one of polyolefin(s) present in the polymeric matrix since the polymeric matrix is composed of at least 90 wt% of polyolefin(s). If only one polyolefin is present in the polymeric matrix and no additional polymer is present, the melting temperature of the polymeric matrix is the melting temperature of the polyolefin.

Preferably, step c) is performed in an extruder, preferably a twin screw extruder. Typically, one may use a 30 L/D or more twin screw extruder. The extruder may be divided in several thermo-controlled or heating zones, a converging zone and a die.

During step c), the polymeric matrix is melted, i.e. all the polymers present in the polymeric matrix are melted. This can be performed by introducing the polymeric matrix in a first thermo-controlled zone of the extruder, named **Z0.** In the subsequent thermo-controlled zone **ZA,** constituted eventually by several heating blocks, the polymeric matrix may be heated and mixed. The temperature of the thermo-controlled zone **ZA** is at least the melting temperature Tₘ of the polymeric matrix, preferably at least 30 °C superior to the melting temperature Tₘ of the polymeric matrix. After that, there is advantageously a decompression to allow the introduction of other components in the extruder.

The olefinic thermoplastic elastomer(s) may be either mixed to the polymeric matrix prior to its melting or added to the melted polymeric matrix.

According to a first embodiment, the at least one olefinic thermoplastic elastomer is added to the previously melted polymeric matrix. In other words, the process comprises the following steps during step c):
c1.1) mixing the polymeric matrix at a temperature of at least the highest temperature between the melting temperature of the polymeric matrix and the melting temperature of the olefinic thermoplastic elastomer(s), preferably at least 30 °C superior to the highest temperature between the melting temperature of the polymeric matrix and the melting temperature of the olefinic thermoplastic elastomer(s), to obtain a melted polymeric matrix,
c1.2) adding the at least olefinic thermoplastic elastomer to the melted polymeric matrix, and
c13) mixing the melted polymeric matrix and the at least one olefinic thermoplastic elastomer.

According to this embodiment, the at least one olefinic thermoplastic elastomer may be added in thermo-controlled zone **ZB,** subsequent to the thermo-controlled zone **ZA,** via a feeder. Advantageously, a decompression is carried out after the melting of the polyolefin (step c1.1)) and before the addition of the olefinic thermoplastic elastomer (step c 1.2)).

According to a second embodiment, the at least one olefinic thermoplastic elastomer is mixed with the polymeric matrix before the melting of the polymeric matrix. In other words, the process comprises the following steps during step c):
c2.1) mixing the polymeric matrix and the at least one olefinic thermoplastic elastomer, and
c2.2) heating the resulting mixture at a temperature of at least the highest temperature between the melting temperature of the polymeric matrix and the melting temperature of the olefinic thermoplastic elastomer(s), preferably at least 30 °C superior to the highest temperature between the melting temperature of the polymeric matrix and the melting temperature of the olefinic thermoplastic elastomer(s).

According to this second embodiment, both polymeric matrix and olefinic thermoplastic elastomer may be introduced in thermo-controlled zone **Z0.**

In both cases, the melted polymeric matrix and the at least one olefinic thermoplastic elastomer are mixed during a time sufficient to disperse homogeneously the at least one olefinic thermoplastic polymer in the melted polymeric matrix. This may be performed in a subsequent thermo-controlled zone **ZC.** Preferably after that, a decompression is applied and the mixture is mixed again in a subsequent thermo-controlled zone **ZD.** Thus, the olefinic thermoplastic elastomer and the polymeric matrix form an intimate mixture. In other words, the mixture is homogeneous and the different components of this mixture do not separate spontaneously from one another.

Optionally, additive(s) may be added during step c). The amount and the nature of these additives are as detailed above. According to this embodiment, the additives may be incorporated at any time: addition to the polymeric matrix prior to the melting step and before or after the addition of the at least one olefinic thermoplastic polymer, or addition to the melted polymeric matrix prior or after the addition of the at least one olefinic thermoplastic polymer. In the case where the 3D printable powder comprises more than one additive, they may be incorporated simultaneously at any step or one after the other at any step or at different steps.

Optionally, these additives, and in particular fillers such as flame retarding agents, may be added may be added during step f). According to this embodiment, additives may be added at any time: addition before or after the sieving. In the case where the 3D printable powder comprises more than one additive, they may be incorporated simultaneously at any step or one after the other at any step or at different steps.

Step d) may be carried out outside the extruder. During this step, the resulting mixture of polymeric matrix, at least one olefinic thermoplastic elastomer and optional additive(s) is powdered to afford the powder of thermoplastic blend as defined above. For example, this may be performed by cryo grinding.

During step e), the resulting powder of thermoplastic blend is mixed with at least one flow aid. The flow aid is as defined above. For that purpose, the at least one flow aid may be added to the powder of thermoplastic blend.

A final step of sieving (step f)) affords the desired 3D printable powder.

According to a particular embodiment, the process of preparation of a 3D printable powder according to the invention comprises at least one additional step g) carried out after step d) and /or step e) and/or step f). This optional step g) consists in a post treatment in order to improve the properties of the 3D printable powder, e.g. to improve the sphericity of the powder. Rounding particles, mechanical and/or thermal treatment, air classification, oxidation, surface coating may be cited as possible post treatments. In a particular embodiment, this optional step g) of post treatment is carried out after step d).

### Three-dimensional article and method of preparation

The invention further relates to a 3D printed article made from the 3D printable powder as defined above, or from the 3D printable powder obtained from the process described above.

In the context of the invention, a "3D printed article" (or "three dimensional printed article" or "3D article") refers to an object bluit by a 3D printing system, such as SLS or MJF for example.

Finally, the invention relates to a method for preparing a 3D printed article. Several additive methods may be used, among which selective laser sintering (SLS) and multi-jet fusion (MJF) techniques are particularly preferred.

The SLS technique implies the formation of superimposed layers that are bonded together by repeating the following two steps:
a) depositing a continuous bed of 3D printable powder or exclusively constituted by the 3D printable powder as defined in the context of the invention, on a platform or on a previously consolidated layer;
b) carrying out a localized consolidation of a portion of the deposited 3D printable powder by applying a laser beam in accordance with a predetermined pattern for each layer and simultaneously bonding the layer that has been formed thereby to the preceding consolidated layer if present, in a manner such as to cause the desired three-dimensional shape of the 3D article to grow progressively.

Advantageously, the continuous bed of 3D printable powder of step a) has a constant thickness and extends as a surface above the section of the desired 3D article taken at the level of the layer, in order to guarantee precision at the ends of the article. The thickness of the bed of powder is advantageously in the range of 40 µm to 120 µm.

The consolidation of step b) is carried out by laser treatment. To this end, it is possible to use any SLS printing machine that is known to the person skilled in the art such as for example a 3D printer of the SnowWhite type from Sharebot, of the Vanguard HS type from 3D Systems, of the Formiga P396 type from EOS, of the Promaker P1000 type from Prodways or of Formiga P110 type from EOS.

The parameters of the SLS printing machine are selected in a manner such that the surface temperature of the bed of powder composition is in the sintering range, i.e. comprised between the offset crystallization temperature and the onset fusion temperature.

The MJF technique implies the formation of superimposed layers that are bonded together by repeating the following steps:
a) depositing a continuous bed of 3D printable powder comprising or exclusively constituted by the 3D printable powder as defined in the context of the invention, on a platform or on a previously consolidated layer;
b) applying a fusing agent in accordance with a predetermined pattern for each layer,
c) carrying out a localized consolidation of a portion of the deposited 3D printable powder by application of energy.

The MJF process may also comprise the application of a detailing agent.

Fusing agents and detailing agents that may be used according to the invention are those commonly used in the art, as detailed in patent application WO 2019/182579 for example.

Whatever the additive process (SLS or MJF) used, the 3D printable powder may be recycled. In other words, the 3D printable powder used during the printing process, which is not consolidated/sintered or fused during the additive manufacturing process for the preparation of a 3D article may be reused for the preparation of another 3D article. Typically, 20 wt% to 100 wt% of 3D printable powder is recycled 3D printable powder. Consolidated/fused parts resulting from SLS printing process may be refined by means of milling or grinding, sieving and annealing in order to be reused for 3D printing via SLS.

The invention will now be further illustrated by the following examples that are for illustrative purpose only.

### Examples

### Example 1

Two 3D printable powders **I** and **II** according to the invention and one 3D printable powder **III** oustside the invention having the formula detailed in **table 1** have been prepared (the percentages are weight percentages given relative to the total weight of the 3D printable powder).

**Table 1:**

| | **I** (invention) | **II** (invention) | **III** (outside invention) |
|---|---|---|---|
| Random Propylene copolymer having a melting temperature of 140°C and a melt flow rate of 10-14 g/10 min at 230°C | 83.65 wt% | 88.63 wt% | 98.37 wt% |
| Phosphite based antioxidant | 0.45 wt% | 0.45 wt% | 0.45 wt% |
| Amine based antioxidant | 0 wt% | 0 wt% | 0.22 wt% |
| Co-crystallizing agent | 5.49 wt% | 0.51 wt% | 0.51 wt% |
| Ethylene propylene elastomer (Vistamaxx^{™} from ExxonMobil) | 9.96 wt% | 9.96 wt% | 0 wt% |
| Silica based flow aids | 0.45 wt% | 0.45 wt% | 0.45 wt% |

3D printable powders **I, II** and **III** are prepared as follows.

3D printable powders **I, II** and **III** are compounded on a 50 L/D twin screw extruder with a screw diameter of 26 mm for lab scale production at 10 to 25 kg/h and on a 32 mm for pilot production (80 to 100 kg/h).

Both twin screw extruders are divided on 10 thermo-controlled zones (Z0 and ZA to ZJ), a converging zone and a die. Strand pelletization was used on the 26 mm diameter extruder, and underwater pelletizing system was used on the 32 mm diameter extruder. In each case the screw profile is the same. The polypropylene is introduced first in the first thermo-controlled zone Z0 of the extruder. A first mixing sequence is carried out by melting the polypropylene in a second thermo-controlled zone ZA comprising heating blocks Z1 and Z2. After that a decompression is performed to allow the introduction of the additives via a side feeder in a heating block Z3 of a subsequent thermo-controlled zone ZB. The olefinic thermoplastic elastomer, the antioxydants and the co-crystallizing agent may be introduced in Z0 or in Z3. The components are mixed in a long mixing sequence in heating blocks Z4 to Z7 of zone ZB, then a decompression is applied followed by a small mixing sequence in heating blocks Z8 and Z9 of ZB and the pumping zone before the die. The temperature profile is as follows: Z0: 10-40°C/ Z1-Z2: 230 °C / Z3-Z9: 180 °C/ Die: 180 °C. The screw speed ranges from 300 to 450 RPM.

After the extruder, the mixture is cryo grinded. The cryo grinding is performed using a pin mill GSM 250 manufactured by Gotic GmbH. The miller is fed by a cooling screw and has a diameter of 250 mm with potentially 3 rings of pins (250 pins in total). Here, only two rings of pins are used. The temperature is regulated at -45 °C with a thermocouple in the milling unit and the speed disc is set at 8900 RPM. After the milling units, sieving allows for the separation of the powder of dimension under 90 µm which is collected from the 90 µm oversize which are incorporated in the cooling screw to be milled again. The sieving unit is a nutation siever with a double screen, and the sieve has a mesh of 90x90 µm. To avoid the clogging on the sieve, it is equipped with an ultrasonic system and elastomeric balls under the sieve.

Then, flow aids are added to the mixture. A mixing is performed using a rapid mixer "Caccia Turbomelangeur serie AV0600B". Finally, sieving is carried out using a vibrating sievier "Sodeva Tamiseur SC12" with ultrasonic system and a screen with a 90 µm square mesh.

The thermal behaviour of these 3D printable powders was evaluated and the results are reported in **table 2.** The values of melting and crystallization temperatures were determined with DSC scan at ± 10 °C/min (performed with a DSC Q25, T.A.Instruments).

**Table 2**

| | T_{m onset} (°C) | Tₘ (°C) | T_{c onset} (°C) | T_{c} (°C) | processing window (°C) |
|---|---|---|---|---|---|
| **I** | 131.3 | 140.7 | 99.5 | 95.6 | 31.8 |
| **II** | 132.6 | 138.9 | 99.8 | 96.3 | 32.8 |
| **III** | 135 | 144.7 | 101.7 | 96.5 | 33.3 |

All compositions have surprisingly similar thermal characteristics. The processing windows are in the range of 31-34 °C. The T_{m onset} is in the range 131-135 °C and the Tₘ is in the range of 139-145 °C. The T_{c onset} is in the range 99-102 °C and the T_{c} is in the range 95-97°C.

3D printable powders **I, II** and **III** were printed using a Prodways P1000 SLS printer. The printing conditions were:
- power bed surface temperature: 132-137 °C,
- chamber temperature: 130-135 °C,
- piston temperature: 120-125 °C,
- hatching distance: 0.2 mm,
- laser power 10-16: W,
- laser scan speed: 3500 mm/s.

The mechanical properties of the 3D printed articles made from 3D printable powders **I, II** and **III** with SLS printer were evaluated and are reported in **table 3** below. Modulus, tensile stress and elongation at break were measured with ZWICK/Roell^{®} Z005 tensiometer (Zwick GmbH, Germany) according to respectively ISO 527-1 and 2 standard. Resilience was measured with ZWICK/Roell^{®} Charpy 255 pendulum impact tester. The maximun tensile stress is obtained at yield.

**Table 3**

| | Modulus gain | | Maximum tensile stress | | Elongation at break | | Resilience | |
|---|---|---|---|---|---|---|---|---|
| Infill power (W) | **I / III** | **II** / **III** | I / III | **II** / **III** | **I / III** | **II** / **III** | **I / III** | **II** / **III** |
| 10 | -15.7% | -15.0% | -12.5% | -9.3% | 170.0% | 240.0% | 66.2% | 80.9% |
| 14 | -16.5% | -16.5% | -16.8% | -15.4% | 106.3% | 175.0% | 80.4% | 106.0% |
| 16 | -20.4% | -18.28% | -14.8% | -9.5% | 77.8% | 200.0% | 68.1% | 75.3% |

The use of 3D printable powders **I** and **II** according to the invention compared to 3D printable powder **III** results in a significative improvement on elongation at yield, elongation at break, flexural modulus and impact on the printed parts.

3D printable powders **I** and **II** were also printed using a MDT 5210 MJF printer. The printing conditions were:
- powder surface temperature: 113°C,
- spread powder temperature: 80°C,
- trolley left/right wall temperature: 100°C,
- fuse lamp trailing (Power): 5750.

The mechanical properties of the printed articles from 3D printable powders **I** and **III** with MJF printer are reported in **table 4.** The same procedures detailed above were used here.

**Table 4**

| | Modulus gain | Maximum tensile stress | Elongation at break | Resilience Charpy Unnotched | Resilience Charpy notched |
|---|---|---|---|---|---|
| **I/III** | -28% | -22% | +170% | +70% | +100% |

Here again, a significant improvement of the elongation at break was observed when using 3D printable powder **I** compared to 3D printable powder **III.**

### Example 2

Similar tests than those reported in example 1 were carried out with a polypropylene homopolymer instead of a random propylene copolymer. 3D printable powder **IV** according to the invention and 3D printable powder **V** outside the invention, of formulas as detailed in **table 5** below, were prepared according to the same procedure detailed in example 1, the only difference being the polyolefin used and the temperature profile of the extruder (Z0: 10-40°C/ Z1-Z2: 230°C / Z3-Z9: 200 °C/ Die: 200 °C). The percentages given are weight percentage relative to the weight of the printable composition.

**Table 5**

| | **IV** (invention) | **V** (outside invention) |
|---|---|---|
| Polypropylene homopolymer having a melting temperature of 165 °C and a melt flow rate of 12 g/10 min at 230 °C | 83.65 wt% | 98.37 wt% |
| Phosphite based antioxidant | 0.45 wt% | 0.45 wt% |
| Amine based antioxidant | 0 wt% | 0.22 wt% |
| Co-crystallizing agent | 5.49 wt% | 0.51 wt% |
| Ethylene propylene elastomer (Vistamaxx^{™} from ExxonMobil) | 9.96 wt% | 0 wt% |
| Silica based flow aids | 0.45 wt% | 0.45 wt% |

The thermal behaviour of these 3D printable powders was evaluated as in example 1 and the results are reported in **table 6.**

**Table 6**

| | T_{m onset} (°C) | Tₘ (°C) | T_{c onset} (°C) | T_{c} (°C) | processing window (°C) |
|---|---|---|---|---|---|
| **IV** | 152.4 | 165.5 | 117.5 | 113.7 | 34.9 |
| **V** | 153.5 | 166.6 | 119.4 | 115.1 | 34.1 |

Both printable powders have similar thermal characteristics.

3D printable powders **IV** and **V** were printed with a Prodways P1000 SLS printer. The printing conditions were:
- power bed surface temperature: 149 °C,
- chamber temperature: 148°C,
- piston temperature: 145°C,
- hatching distance: 0.2 mm,
- laser power: 20 W,
- laser scan speed: 3500 mm/s.

The mechanical properties of the 3D printed articles made from 3D printable powders **IV** and **V** with SLS printer were evaluated and are reported in **table 7** below. The same procedures than reported in example 1 were used for the measurement of these mechanical properties.

**Table 7**

| | Modulus gain | Maximum tensile stress | Elongation at break | Resilience |
|---|---|---|---|---|
| **IV/V** | -16% | 12% | 153% | 147% |

A slight decrease of the tensile modulus but an important increase of the impact resistance and of the elongation at break was observed when using 3D printable powder **IV** compared to 3D printable powder **V.**

### Example 3

3D printable powders **VI** and **VII** according to the invention and **VIII** and **IX** outside the invention were prepared and compared to 3D printable powders **I, II** and **III.**

3D printable powders **VI, VII, VIII** and **IX** having the formula as detailed in **table 8** below were prepared according to a similar procedure than the one detailed in example 1. The percentages are weight percentages relative to the total weight of the 3D printable powder.

**Table 8**

| | **VI** (invention) | **VII** (invention) | **VIII** (outside invention) | **IX** (outside invention) |
|---|---|---|---|---|
| Random Propylene copolymer having a melting temperature of 140°C and a melt flow rate of 10-14 g/10 min at 230°C | 73.6 wt% | 88.6 wt% | 78.6 wt% | 88.6 wt% |
| Phosphite based antioxidant | 0.45 wt% | 0.45 wt% | 0.45wt% | 0.45wt% |
| Co-crystallizing agent | 5.5 wt% | 0.5 wt% | 0.5wt% | 0.5wt% |
| Ethylene propylene elastomer (Vistamaxx^{®}3020 from ExxonMobil) | 20 wt% | 0 wt% | 0 wt% | 0 wt% |
| ethylene octene elastomer (Engage^{™®} from Dow Chemicals) | 0 wt% | 10 wt% | 0 wt% | 0 wt% |
| SEBS (Calprene 6120 from Dynasol) | 0 wt% | 0 wt% | 20 wt% | 10 wt% |
| Silica based flow aids | 0.45wt% | 0.45 wt% | 0.45 wt% | 0.45 wt% |

These compositions were printed using a Prodways P1000 SLS printer, to form dumbells. The printing conditions were:
- power bed surface temperature: 132-138 °C,
- chamber temperature: 130-135 °C,
- piston temperature: 120-125 °C,
- hatching distance: 0.2 mm,
- laser power: 16 W,
- laser scan speed: 3500 mm/s.

The mechanical and thermal properties of the 3D printed articles from 3D printable powders **I, II, III, VI, VII, VIII** and **IX** were evaluated according the procedures detailed in example 1. The results are as mentioned in **table 9** and **table 10** below.

**Table 9**

| | Et (MPa) | Maximum tensile strength (MPa) | Elongation at break (%) |
|---|---|---|---|
| **I** (invention) | 1120 | 24 | 32 |
| **II** (invention) | 1090 | 22 | 56 |
| **III** (outside invention) | 1350 | 26 | 18 |
| **VI** (invention) | 800 | 20 | 75 |
| **VII** (invention) | 950 | 21 | 60 |
| **VIII** (outside invention) | 750 | 12 | 8 |
| **IX** (outside invention) | 850 | 16 | 14 |

Ethylene propylene elastomer-based 3D printable powders **(I** and **II)** and ethylene alpha-olefin elastomer-based powders **(VI** and **VII)** have much better mechanical properties compared to 3D printable powders without elastomer **(III)** or with a styrenic elastomer **(VIII** and **IX).** The addition of these olefinic thermosplatic elastomers also improved the processing window.

The addition of styrenic elastomer as olefinic thermoplastic elastomer did not improve the elongation at break but decreased it. It also induced nucleating effects that reduce the processing window and impact the printing process.

**Table 10**

| | T_{m onset} (°C) | Tₘ (°C) | T_{c onset} (°C) | T_{c} (°C) | Processing window (°C) |
|---|---|---|---|---|---|
| **I** (invention) | 129.5 | 140.6 | 100.0 | 96.2 | 29.5 |
| **II** (invention) | 124.9 | 142.9 | 99.7 | 94.3 | 25.2 |
| **III** (outside invention) | 125.2 | 141.7 | 101.0 | 97.0 | 24.2 |
| **VI** (invention) | 131.4 | 136.7 | 97.5 | 93.3 | 33.9 |
| **VII** (invention) | 125.1 | 141.2 | 99.6 | 95.0 | 25.5 |
| **VIII (outside** invention) | 125.2 | 141 | 106.0 | 102.4 | 19.2 |
| **IX** (outside invention) | 125.2 | 141.3 | 105.2 | 102.2 | 20.0 |

## Claims

1. - 3D printable powder comprising:
- a powder of thermoplastic blend comprising relative to the weight of the thermoplastic blend:
- from 75 wt% to 98 wt% of a polymeric matrix comprising at least 90 wt% relative to the weight of the polymeric matrix of at least one polyolefin, and
- from 2 wt% to 25 wt% of at least one olefinic thermoplastic elastomer, said olefinic thermoplastic elastomer being chosen from ethylene acetate elastomers, ethylene acrylate elastomers, ethylene propylene elastomers and ethylene alpha-olefin elastomers, and
- at least one flow aid.

2. - 3D printable powder according to claim 1 wherein the at least one olefinic thermoplastic elastomer is chosen from ethylene propylene elastomers and ethylene alpha-olefin elastomers.

3. - 3D printable powder according to claim 1 or 2 wherein the polyolefin is chosen from polyethylene, polypropylene, polybutene-1, polymethylpentene, polyoctene, polyisoprene, polybutadiene, or a copolymer thereof.

4. - 3D printable powder according to any one of claims 1 to 3 wherein the polyolefin is a copolymer of polyethylene, polypropylene, polybutene-1, polymethylpentene, polyoctene, polyisoprene, or polybutadiene with a C2-C12 alpha-alkylene.

5. - 3D printable powder according to any one of claims 1 to 4 wherein the polymeric matrix comprises at least one additional polymer, said additional polymer not being a polyolefin, preferably chosen from polyamides, polyesters, and polyetheramides.

6. - 3D printable powder according to any one of claims 1 to 4 wherein the polymeric matrix does not comprise additional polymer.

7. - 3D printable powder according to any one of claims 1 to 6 wherein the at least one flow aid is chosen from silica, alumina and waxes having a melting temperature of at least the melting temperature of the polymeric matrix minus 10 °C.

8. - 3D printable powder according to any one of claims 1 to 7, wherein the powder of thermoplastic blend further comprises fillers, antioxidant(s), co-crystallizer(s), plasticizer(s), dye(s), thermal stabilizer(s), antistatic agent(s), waxe(s), anti-nucleating agent(s) and/or compatibilizer(s).

9. - 3D printable powder according to any one of claims 1 to 8 having an elongation at break of at least 40% measured according to ASTM D638 standard.

10. - 3D printable powder according to any one of claims 1 to 9 having a Charpy unnotched impact of at least 30 kJ/m² at 23 °C measured according to ISO 179-1 standard.

11. - 3D printable powder according to any one if claims 1 to 10 having a mean particle size d90 ranging from 75 µm to 200 µm.

12. - Process of preparation of the 3D printable powder according to any one of claims 1 to 11 comprising the following steps:
a) providing a polymeric matrix comprising 90 wt% relative to the weight of the polymeric matrix of at least one polyolefin,
b) providing at least one olefinic thermoplastic elastomer chosen from ethylene acetate elastomers, ethylene acrylate elastomers, ethylene propylene elastomers and ethylene apha-olefin elastomers,
c) mixing the polymeric matrix with the olefinic thermoplastic elastomer(s) at a temperature of at least the highest temperature between the melting temperature of the polymeric matrix and the melting temperature of the olefinic thermoplastic elastomer(s),
d) powdering the resulting mixture to obtain a powder of thermoplastic blend,
e) mixing the powder of thermoplastic blend with at least one flow aid,
f) sieving to obtain the 3D printable powder.

13. - Process of preparation of a powder according to claim 12, wherein step c) comprises the following steps:
c1.1) mixing the polymeric matrix at a temperature of at least the highest temperature between the melting temperature of the polymeric matrix and the melting temperature of the olefinic thermoplastic elastomer(s) to obtain a melted polymeric matrix,
c1.2) adding the at least one olefinic thermoplastic elastomer to the melted polymeric matrix, and
c1.3) mixing the melted polymeric matrix and the at least one olefinic thermoplastic elastomer.

14. - The process of preparation of a 3D printable powder according to claim 12 wherein step c) comprises the following steps:
c2.1) mixing the polymeric matrix and the at least one olefinic thermoplastic elastomer, and
c2.2) heating the resulting mixture at a temperature of at least the highest temperature between the melting temperature of the polymeric matrix and the melting temperature of the olefinic thermoplastic elastomer(s).

15. - Process of preparation of a 3D printable powder according to any one of claims 12 to 14 wherein fillers, antioxidant(s), anti nucleating agent(s), co-crystallizer(s), plasticizer(s), dye(s), thermal stabilizer(s), antistatic agent(s), waxe(s), and/or compatibilizer(s) are added at step c) and/or after step f), simultaneously or one after the other in any order.

16. - The process of preparation of a 3D printable powder according to any one of claims 12 to 15 comprising a step g) carried out after step d) and/or step e) and/or step f) of oxidation, mechanical and/or thermal treatment, surface coating, rounding particle, and/or air classification.

17. - The process of preparation of a 3D printable powder according to any one of claims 12 to 16 wherein step c) is carried out in an extruder, preferably a twin-screw extruder.

18. - A three-dimensional printed article made from the 3D printable powder according to any one of claims 1 to 11, or from the 3D printable powder obtained according to the process as claimed in any one of claims 12 to 17.

19. - A method for preparing a three-dimensional printed article according to claim 18 using the selective laser sintering or the multi-jet fusion technique.

20. - Use of a 3D printable powder according to anyone of claims 1 to 11, or obtained according to a process as claimed in any one of claims 12 to 17 for the manufacture of a three dimensional printed article.

## Patentansprüche

1. 3D-Druckbares Pulver umfassend:
- ein Pulver aus thermoplastischem Gemisch umfassend, das bezogen auf das Gewicht des thermoplastischen Gemischs:
- von 75 Gew.-% bis 98 Gew.-% an einer Polymermatrix umfassend wenigstens 90 Gew.-%, bezogen auf das Gewicht der Polymermatrix, an wenigstens einem Polyolefin, und
- von 2 Gew.-% bis 25 Gew.-% an wenigstens einem olefinischen thermoplastischen Elastomer, wobei das olefinische thermoplastische Elastomer ausgewählt ist aus Ethylenacetat-Elastomeren, Ethylenacrylat-Elastomeren, Ethylen-Propylen-Elastomeren und Ethylen-alpha-Olefin-Elastomeren, und
- wenigstens ein Fließhilfsmittel.

2. 3D-Druckbares Pulver nach Anspruch 1, wobei das wenigstens eine olefinische thermoplastische Elastomer ausgewählt ist aus Ethylen-Propylen-Elastomeren und Ethylen-alpha-Olefin-Elastomeren.

3. 3D-Druckbares Pulver nach Anspruch 1 oder 2, wobei das Polyolefin ausgewählt ist aus Polyethylen, Polypropylen, Polybuten-1, Polymethylpenten, Polyocten, Polyisopren, Polybutadien und einem Copolymer davon.

4. 3D-Druckbares Pulver nach einem der Ansprüche 1 bis 3, wobei das Polyolefin ein Copolymer aus Polyethylen, Polypropylen, Polybuten-1, Polymethylpenten, Polyocten, Polyisopren oder Polybutadien mit einem C2-C12-alpha-Alkylen ist.

5. 3D-Druckbares Pulver nach einem der Ansprüche 1 bis 4, wobei die Polymermatrix wenigstens ein zusätzliches Polymer umfasst, wobei das zusätzliche Polymer kein Polyolefin ist, vorzugsweise ausgewählt aus Polyamiden, Polyestern und Polyetheramiden.

6. 3D-Druckbares Pulver nach einem der Ansprüche 1 bis 4, wobei die Polymermatrix kein zusätzliches Polymer umfasst.

7. 3D-Druckbares Pulver nach einem der Ansprüche 1 bis 6, wobei das wenigstens eine Fließhilfsmittel ausgewählt ist aus Siliciumdioxid, Aluminiumoxid und Wachsen mit einer Schmelztemperatur von wenigstens der Schmelztemperatur der Polymermatrix minus 10 °C.

8. 3D-Druckbares Pulver nach einem der Ansprüche 1 bis 7, wobei das Pulver aus thermoplastischem Gemisch ferner Füllstoffe, Antioxidationsmittel, Cokristallisator(en), Weichmacher, Farbstoff(e), Wärmestabilisator(en), antistatische Mittel, Wachs(e), Anti-Keimbildner und/oder Kompatibilisator(en) umfasst.

9. 3D-Druckbares Pulver nach einem der Ansprüche 1 bis 8 mit einer Bruchdehnung von wenigstens 40 %, gemessen nach ASTM D638-Standard.

10. 3D-Druckbares Pulver nach einem der Ansprüche 1 bis 9 mit einem kerbfreien Charpy-Schlagfestigkeit von wenigstens 30 kJ/m² bei 23 °C, gemessen nach ISO 179-1-Standard.

11. 3D-Druckbares Pulver nach einem der Ansprüche 1 bis 10 mit einer mittleren Partikelgröße d90 in dem Bereich von 75 µm bis 200 µm.

12. Verfahren zur Herstellung des 3D-druckbaren Pulvers nach einem der Ansprüche 1 bis 11, umfassend die folgenden Schritte:
a) Bereitstellen einer Polymermatrix, die 90 Gew.-%, bezogen auf das Gewicht der Polymermatrix, an wenigstens einem Polyolefin umfasst,
b) Bereitstellen wenigstens eines olefinischen thermoplastischen Elastomers ausgewählt aus Ethylenacetat-Elastomeren, Ethylenacrylat-Elastomeren, Ethylen-Propylen-Elastomeren und Ethylen-alpha-Olefin-Elastomeren,
c) Mischen der Polymermatrix mit dem oder den olefinischen thermoplastischen Elastomeren bei einer Temperatur von wenigstens der höchsten Temperatur zwischen der Schmelztemperatur der Polymermatrix und der Schmelztemperatur des oder der olefinischen thermoplastischen Elastomere,
d) Pulverisieren des erhaltenen Gemischs, um ein Pulver aus thermoplastischem Gemisch zu erhalten,
e) Mischen des Pulvers aus thermoplastischem Gemisch mit wenigstens einem Fließhilfsmittel,
f) Sieben, um das 3D-druckbare Pulver zu erhalten.

13. Verfahren zur Herstellung eines Pulvers nach Anspruch 12, wobei Schritt c) die folgenden Schritte umfasst:
c1.1) Mischen der Polymermatrix bei einer Temperatur von wenigstens der höchsten Temperatur zwischen der Schmelztemperatur der Polymermatrix und der Schmelztemperatur des oder der olefinischen thermoplastischen Elastomere, um eine geschmolzene Polymermatrix zu erhalten,
c1.2) Zugeben des wenigstens einen olefinischen thermoplastischen Elastomers zu der geschmolzenen Polymermatrix, und
c1.3) Mischen der geschmolzenen Polymermatrix und des wenigstens einen olefinischen thermoplastischen Elastomers.

14. Verfahren zur Herstellung eines 3D-druckbaren Pulvers nach Anspruch 12, wobei Schritt c) die folgenden Schritte umfasst:
c2.1) Mischen der Polymermatrix und des wenigstens einen olefinischen thermoplastischen Elastomers, und
c2.2) Erhitzen des erhaltenen Gemischs auf eine Temperatur von wenigstens der höchsten Temperatur zwischen der Schmelztemperatur der Polymermatrix und der Schmelztemperatur des oder der olefinischen thermoplastischen Elastomere.

15. Verfahren zur Herstellung eines 3D-druckbaren Pulvers nach einem der Ansprüche 12 bis 14, wobei Füllstoffe, Antioxidationsmittel, Anti-Keimbildner, Cokristallisator(en), Weichmacher, Farbstoff(e), Wärmestabilisator(en), antistatische Mittel, Wachs(e) und/oder Kompatibilisator(en) bei Schritt c) und/oder nach Schritt f) gleichzeitig oder nacheinander in beliebiger Reihenfolge zugegeben werden.

16. Verfahren zur Herstellung eines 3D-druckbaren Pulvers nach einem der Ansprüche 12 bis 15, umfassend einen Schritt g), der nach Schritt d) und/oder Schritt e) und/oder Schritt f) durchgeführt wird, der Oxidation, mechanischen und/oder thermischen Behandlung, Oberflächenbeschichtung, Partikelabrundung und/oder Luftklassierung.

17. Verfahren zur Herstellung eines 3D-druckbaren Pulvers nach einem der Ansprüche 12 bis 16, wobei Schritt c) in einem Extruder, vorzugsweise einem Doppelschneckenextruder, durchgeführt wird.

18. Dreidimensionaler gedruckter Gegenstand, hergestellt aus dem 3D-druckbaren Pulver nach einem der Ansprüche 1 bis 11 oder aus dem 3D-druckbaren Pulver, erhalten nach dem Verfahren nach einem der Ansprüche 12 bis 17.

19. Verfahren zur Herstellung eines dreidimensionalen gedruckten Gegenstands nach Anspruch 18 unter Verwendung von selektivem Lasersintern oder des Multi-Jet-Fusion-Verfahrens.

20. Verwendung eines 3D-druckbaren Pulvers nach einem der Ansprüche 1 bis 11 oder erhalten nach einem Verfahren nach einem der Ansprüche 12 bis 17 zur Herstellung eines dreidimensionalen gedruckten Gegenstands.

## Revendications

1. Poudre imprimable en 3D comprenant :
- une poudre de mélange thermoplastique comprenant par rapport au poids du mélange thermoplastique :
- de 75 % en poids à 98 % en poids d'une matrice polymérique comprenant au moins 90 % en poids par rapport au poids de la matrice polymérique d'au moins une polyoléfine, et
- de 2 % en poids à 25 % en poids d'au moins un élastomère thermoplastique oléfinique, ledit élastomère thermoplastique oléfinique étant choisi parmi les élastomères d'éthylène acétate, les élastomères d'éthylène acrylate, les élastomères d'éthylène propylène et les élastomères d'éthylène alpha-oléfine, et
- au moins un adjuvant d'écoulement.

2. Poudre imprimable en 3D selon la revendication 1, dans laquelle l'au moins un élastomère thermoplastique oléfinique est choisi parmi les élastomères d'éthylène propylène et les élastomères d'éthylène alpha-oléfine.

3. Poudre imprimable en 3D selon la revendication 1 ou 2, dans laquelle la polyoléfine est choisie parmi le polyéthylène, le polypropylène, le polybutène-1, le polyméthylpentène, le polyoctène, le polyisoprène, le polybutadiène, ou un copolymère de ceux-ci.

4. Poudre imprimable en 3D selon l'une quelconque des revendications 1 à 3, dans laquelle la polyoléfine est un copolymère de polyéthylène, de polypropylène, de polybutène-1, de polyméthylpentène, de polyoctène, polyisoprène, ou de polybutadiène avec un alpha-alkylène en C2-C12.

5. Poudre imprimable en 3D selon l'une quelconque des revendications 1 à 4, dans laquelle la matrice polymérique comprend au moins un polymère supplémentaire, ledit polymère supplémentaire n'étant pas une polyoléfine, de préférence choisi parmi les polyamides, les polyesters, et les polyétheramides.

6. Poudre imprimable en 3D selon l'une quelconque des revendications 1 à 4, dans laquelle la matrice polymérique ne comprend pas de polymère supplémentaire.

7. Poudre imprimable en 3D selon l'une quelconque des revendications 1 à 6, dans laquelle l'au moins un adjuvant d'écoulement est choisi parmi la silice, l'alumine et les cires possédant une température de fusion d'au moins la température de fusion de la matrice polymérique moins 10 °C.

8. Poudre imprimable en 3D selon l'une quelconque des revendications 1 à 7, dans laquelle la poudre de mélange thermoplastique comprend en outre des charges, un ou plusieurs antioxydant(s), un ou plusieurs co-agent(s) de cristallisation, un ou plusieurs plastifiant(s), un ou plusieurs colorant(s), un ou plusieurs stabilisant(s) thermique(s), un ou plusieurs agent(s) antistatique(s), une ou plusieurs cire(s), un ou plusieurs agent(s) anti-nucléation et/ou un ou plusieurs agent(s) compatibilisant(s).

9. Poudre imprimable en 3D selon l'une quelconque des revendications 1 à 8 possédant un allongement à la rupture d'au moins 40 % mesuré selon la norme ASTM D638.

10. Poudre imprimable en 3D selon l'une quelconque des revendications 1 à 9 ayant un impact Charpy non-entaillé d'au moins 30 kJ/m² à 23 °C mesuré selon la norme ISO 179-1.

11. Poudre imprimable en 3D selon l'une quelconque des revendications 1 à 10 possédant une taille moyenne de particule d90 allant de 75 µm à 200 µm.

12. Procédé de préparation de la poudre imprimable en 3D selon l'une quelconque des revendications 1 à 11 comprenant les étapes suivantes :
a) fournir une matrice polymérique comprenant 90 % en poids par rapport au poids de la matrice polymérique d'au moins une polyoléfine,
b) fournir au moins un élastomère thermoplastique oléfinique choisi parmi les élastomères d'éthylène acétate, les élastomères d'éthylène acrylate, les élastomères d'éthylène propylène et les élastomères d'éthylène alpha-oléfine,
c) mélanger la matrice polymérique avec le ou les élastomère(s) thermoplastique(s) oléfinique(s) à une température d'au moins la température la plus élevée entre la température de fusion de la matrice polymérique et la température de fusion de l'élastomère ou des élastomères thermoplastique(s) oléfinique(s),
d) pulvériser le mélange résultant pour obtenir une poudre de mélange thermoplastique,
e) mélanger la poudre de mélange thermoplastique avec au moins un adjuvant d'écoulement,
f) tamiser pour obtenir la poudre imprimable en 3D.

13. Procédé de préparation d'une poudre selon la revendication 12, l'étape c) comprenant les étapes suivantes :
c1.1) mélanger la matrice polymérique à une température d'au moins la température la plus élevée entre la température de fusion de la matrice polymérique et la température de fusion de l'élastomère ou des élastomères thermoplastique(s) oléfinique(s) pour obtenir une matrice polymérique fondue,
c1.2) ajouter l'au moins un élastomère thermoplastique oléfinique dans la matrice polymérique fondue, et
c1.3) mélanger la matrice polymérique fondue et l'au moins un élastomère thermoplastique oléfinique.

14. Procédé de préparation d'une poudre imprimable en 3D selon la revendication 12, l'étape c) comprenant les étapes suivantes :
c2.1) mélanger la matrice polymérique et l'au moins un élastomère thermoplastique oléfinique, et
c2.2) chauffer le mélange résultant à une température d'au moins la température la plus élevée entre la température de fusion de la matrice polymérique et la température de fusion de l'élastomère ou des élastomères thermoplastique(s) oléfinique(s).

15. Procédé de préparation d'une poudre imprimable en 3D selon l'une quelconque des revendications 12 à 14 dans laquelle des charges, un ou plusieurs antioxydant(s), un ou plusieurs agents(s) anti-nucléation, un ou plusieurs co-agent(s) de cristallisation, un ou plusieurs plastifiant(s), un ou plusieurs colorant(s), un ou plusieurs stabilisant(s) thermique(s), un ou plusieurs agent(s) antistatique(s), une ou plusieurs cire(s) et/ou un ou plusieurs agent(s) compatibilisant(s) sont ajoutés à l'étape c) et/ou après l'étape f), simultanément ou l'un après l'autre dans un ordre quelconque.

16. Procédé de préparation d'une poudre imprimable en 3D selon l'une quelconque des revendications 12 à 15 comprenant une étape g) réalisée après l'étape d) et/ou l'étape e) et/ou l'étape f) d'oxydation, de traitement mécanique et/ou thermique, de revêtement de surface, d'arrondissage de particule, et/ou de classification pneumatique.

17. Procédé de préparation d'une poudre imprimable en 3D selon l'une quelconque des revendications 12 à 16, dans lequel l'étape c) est réalisée dans une extrudeuse, de préférence une extrudeuse à deux vis.

18. Article imprimé tridimensionnel fabriqué à partir de la poudre imprimable en 3D selon l'une quelconque des revendications 1 à 11, ou à partir de la poudre imprimable en 3D obtenue selon le procédé selon l'une quelconque des revendications 12 à 17.

19. Procédé de préparation d'un article imprimé tridimensionnel selon la revendication 18 en utilisant la technique de frittage laser sélectif ou la technique de fusion multi-jets.

20. Utilisation d'une poudre imprimable en 3D selon l'une quelconque des revendications 1 à 11, ou obtenue selon un procédé selon l'une quelconque des revendications 12 à 17 pour la fabrication d'un article imprimé tridimensionnel.
